# EUROPÄISCHE PATENTSCHRIFT

(11) **EP 0 485 758 B1**
(45) Veröffentlichungstag und Bekanntmachung des Hinweises auf die Patenterteilung: **25.09.1996**
(21) Anmeldenummer: 91117725.1
(22) Anmeldetag: 17.10.1991
(51) Int. Cl.: F16P 3/08, D06F 49/00, D06F 39/14

(54) **Verschlussvorrichtung für einen Gefahrenbereich**
Closure device for a danger area
Dispositif de fermeture pour une zone dangereuse

(30) Priorität: 16.11.1990 DE 4036622
(43) Veröffentlichungstag der Anmeldung: 20.05.1992
(73) Patentinhaber: BOSCH-SIEMENS HAUSGERÄTE GmbH, D-81669 München (DE)
(72) Erfinder: Wiethe, Reinhard, W-1000 Berlin 22 (DE); Böcker, Heinrich, Dipl.-Ing., W-1000 Berlin 13 (DE); Herrmann, Peter, W-1000 Berlin 20 (DE); Schulz, Manfred, Dipl.-Ing., W-1000 Berlin 62 (DE)

(56) Entgegenhaltungen:
- US-A- 3 803 725
- US-A- 3 924 085

## Beschreibung

Die Erfindung geht aus von einer Verschlußvorrichtung für einen durch eine Tür oder Klappe abschließbaren und durch eine Funktion gekennzeichneten Gefahrenbereich, dessen Funktion ausschließlich von außen einschaltbar ist, wenn die Tür oder Klappe die Schließposition inne hat, insbesondere für einen Haushalt-Wäschetrockner mit einer Tür oder Klappe zur von vorn beschickbaren Wäschetrommel als Gefahrenbereich und mit einer Handhabe, die bei geschlossener Tür die Einschaltung der Funktion, insbesondere der Trommeldrehung, ermöglicht.

Bei am Markt befindlichen Haushalt-Wäschetrocknern sind die Türen oder Klappen vom Trommel-Innenraum her aufdrückbar. Dies dient der Möglichkeit, für in die Wäschetrommel eingestiegene Kinder, die die Tür oder Klappe hinter sich zugezogen hatten, diese Tür oder Klappe von innen wieder aufzustoßen. Allerdings verbleibt hierbei immer noch eine Gefahr für die Kinder: Vor dem Einsteigen in die Wäschetrommel kann bei geöffneter Tür die Starttaste gedrückt sein. Bei geöffneter Tür dreht sich zwar die Wäschetrommel nicht, läuft aber sofort an, sobald die Tür - von innen oder von außen - geschlossen wird. Befindet sich ein Kind dann in der sich drehenden Trommel, unterliegt es unbedingt einer Verletzungsgefahr und dem Verlust der Orientierung, die allein ein Aufstoßen der Tür ermöglichen könnte.

Diese Gefahr wird zwar bereits durch einen Sicherheits-Startschalter für Wäschetrockner gebannt (US-A-3 803 725), bei dem in Höhe eines Stößels für den Startschalter zwei federbelastete Gleitkulissen mit je einer Kerbe gegeneinander verschieblich gelagert sind.

Die eine Gleitkulisse ist von der Handhabe betätigbar und ihre Kerbe ist steilflankig, damit der in diese Kerbe eingefallene Stößel die Gleitkulisse durch Formschluß in dieser Position hält. Die andere Gleitkulisse ist über einen Umlenkhebel von der Tür oder Klappe in Schließposition betätigbar. Ihre Kerbe hat eine in Öffnungsrichtung der Tür oder Klappe wirksame Auflaufschräge, die ohne die Last der geschlossenen Tür oder Klappe unter der Wirkung der Gleitkulissen-Feder den Stößel des Startschalters wieder in die Aus-Position drückt. Aufgrund der quer auf den Stößel wirkenden Feder- und Öffnungskräfte steht die Haltbarkeit des Startschalters sehr infrage.

Der Erfindung liegt die Aufgabe zugrunde, bei einer Verschlußvorrichtung für einen Gefahrenbereich eingangs beschriebener Art eine Einrichtung zu schaffen, die ein Wiedereinschalten der den Gefahrenbereich kennzeichnenden Funktion (z.B. Trommeldrehen) ausschließt, wenn die Tür oder Klappe vom Innenraum des Gefahrenbereichs her geschlossen wird. Außerdem sollen in einen die Einschaltung der Funktion bewirkenden Schalter Kräfte nur in seiner Betätigungs-Richtung eingeleitet werden.

Erfindungsgemäß wird diese Aufgabe dadurch gelöst, daß die Handhabe nichtrastend ist, daß an einem für die Bedienungsperson unerreichbaren Ort auf einem Schlitten ein die Funktion steuernder Tastenschalter angeordnet ist, dessen Taste in Bewegungsrichtung des Schlittens betätigbar und von einem sie gegen Betätigung schützenden Bügel abgedeckt ist, der am Schlitten gelagert und durch die Handhabe aus seiner Schutzposition bringbar oder zur Bewegung aus dieser Schutzposition vorbereitbar ist, daß an der Tür oder Klappe ein in Schließposition auf der Taste bzw. dem Bügel lastender Schaltfinger angebracht ist und daß der Schlitten in Richtung auf den Schaltfinger zu federvorbelastet ist.

Bei Wäschetrocknern vereinfacht die vorliegende Erfindung den Aufbau von Türen. Kunden wünschen sich an solchen Wäschetrocknern eine einfache Möglichkeit zum Wechseln des Türanschlags. Hier kann der Schaltfinger zum Auslösen der Gefahrenfunktion (Trommeldrehung) mittig in der Nähe einer querliegenden Türkante angebracht sein. Wenn der Anschlag der Tür gewechselt werden soll, muß nämlich nicht auch noch die Verschlußvorrichtung umgebaut werden, weil der mittig angebrachte Schaltfinger auch nach dem Wechsel des Türanschlags sich am selben Ort befindet.

Mit einer derartigen Ausbildung der Verschlußvorrichtung kann der Tastenschalter die Funktion des Gefahrenbereichs erst einschalten, wenn der schützende Bügel vor seiner Taste aus deren Schutzposition bringbar ist und dadurch der Schaltfinger der Tür oder Klappe sich auf die Taste zu bewegen kann. Diese Schutzposition ist ausschließlich mittels der Handhabe aufhebbar. Da die Handhabe außerdem nicht rastet, kann die Schutzposition ausschließlich bei geschlossener Tür oder Klappe aufgehoben werden. Dadurch ist die Gefahrenfunktion vom Gefahrenbereich her nicht einschaltbar, wenn nämlich die Tür oder Klappe vom Innenraum des Gefahrenbereichs her geschlossen worden ist.

Bei einer besonders vorteilhaften Ausbildungsform der erfindungsgemäßen Vorrichtung ist der Bügel Bestandteil eines Stößels, der in Bewegungsrichtung des Schlittens beweglich auf diesem gelagert ist, durch eine von der Handhabe entriegelbare Sperre in der Schutzposition gehalten ist und nach der Entriegelung in eine Position überführbar ist, in der die Taste vom Schaltfinger der Tür oder Klappe erreichbar ist. Ist die Sperre ortsfest angeordnet, dann läßt sich die Tür oder Klappe nicht schließen, solange die Handhabe nicht betätigt wird. Dabei stößt nämlich der Schaltfinger auf den gesperrten Bügel. Ist allerdings die Sperre mit dem Schlitten verbunden, dann läßt sich die Tür oder Klappe schließen, wobei der Schaltfinger den gesperrten Bügel zusammen mit dem Schlitten und dem darauf montierten Tastenschalter zurückstößt, ohne die Taste des Tastenschalters selbst zu erreichen.

Im ersten Falle ist augenscheinlich, daß die Handhabe zum Schließen der Tür zu drücken ist. Erst dann läuft beim Schließen der Tür oder Klappe die Funktion des Gefahrenbereichs an, z.B. die Trommeldrehung bei einem Wäschetrockner. Im zweiten Fall kann beim Schließen der Tür das Betätigen der Schaltertaste dadurch vorbereitet werden, daß der Schlitten über den Bügel zusammen mit dem Tastenschalter durch den Schaltfinger zunächst in eine Innenposition geschoben wird, nach dem Betätigen der Handhabe die Sperre jedoch den Bügel freigibt, wodurch sich der Schlitten zusammen mit dem Tastenschalter wieder gegen den Schaltfinger bewegt. Dabei wird die Taste des Tastenschalters vom Schaltfinger betätigt und die Funktion im Gefahrenbereich eingeschaltet.

In einer bevorzugten Ausbildungsform der erfindungsgemäßen Verschlußvorrichtung ist der Bügel am Schlitten schwenkbar gelagert. Eine schwenkbare Lagerung des Bügels vereinfacht die Bewegung aus der Schutzposition.

Beispielsweise kann in einer vorteilhaften Weiterbildung der Erfindung der Bügel über einen Bowdenzug mittels der Handhabe in die Entriegelungsposition überführbar sein.

Alternativ dazu ist der Bügel über einen Winkelhebel mittels der Handhabe in die Entriegelungsposition überführbar. Je nach den Konstruktionsmerkmalen der Umgebung, in die die erfindungsgemäße Verschlußvorrichtung einzufügen ist, kann die eine oder die andere Alternative von besonderem Vorteil sein.

Bei Einsatz der zweiten Alternative, ist eine Ausführung der erfindungsgemäßen Verschlußvorrichtung von besonderem Vorteil, bei der der Winkelhebel an seinem der Handhabe abgewandten freien Ende einen Kulissenzapfen trägt und mit diesem in eine Kulissenführung des Bügels seitlich eingreift. Hierdurch ist die Montagemöglichkeit vereinfacht, weil die Verschlußvorrichtung an einem Ort in der Nähe des Dekkungsbereiches der Tür oder Klappe und die Handhabe mit dem gesondert gelagerten oder an ihr drehbeweglich verbundenen Winkelhebel an einem davon entfernten Ort aufgebaut werden können. Dies spielt insbesondere eine Rolle bei der Montage von HaushaltHaushalt-Wäschetrocknern, bei denen die Verschlußvorrichtung am Gehäuse in der Nähe der Beschickungsöffnung und die Handhabe und ggf. der Winkelhebel entfernt davon an der Rückseite der Bedienungsblende montiert werden müssen.

Anhand der in der Zeichnung dargestellten Ausführungsbeispiele der erfindungsgemäßen Verschlußvorrichtung ist die Erfindung im Zusammenhang mit Haushalt-Wäschetrocknern nachstehend erläutert. Es zeigen:
- Fig. 1: eine Ausführungsform für die Verschlußvorrichtung in einer Ansicht von vorn und
- Fig. 2: eine Verschlußvorrichtung gemäß Fig, 1 in einer Ansicht von oben,
- Fig. 3: eine zweite Ausführungsform für eine erfindungsgemäße Verschlußvorrichtung in einer Ansicht von vorn,
- Fig. 4: eine Verschlußvorrichtung gemäß Fig. 3 in einer Ansicht von oben und
- Fig. 5: eine Verschlußvorrichtung gemäß Fig. 3 und 4 in Seitenansicht und
- Fig. 6: eine perspektivische Darstellung für eine dritte Variante der erfindungsgemäßen Verschlußvorrichtung im Zusammenwirken mit einem Winkelhebel und einer Handhabe.

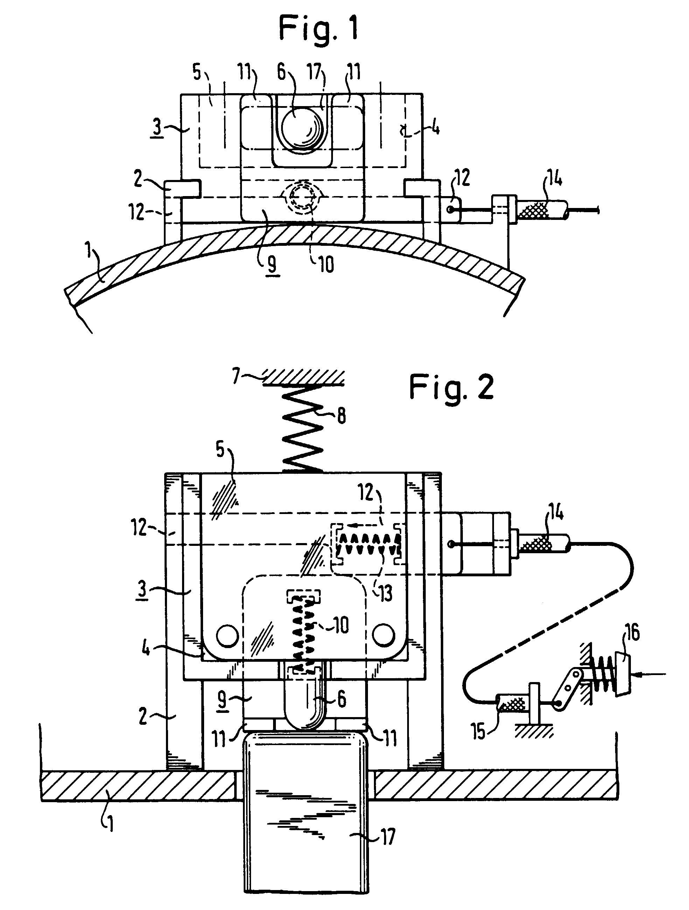

An einem Rahmenteil 1 in Fig. 1 eines die nicht dargestellte Beschickungsöffnung eines Wäschetrockners umfassenden Bauteils ist eine Gleitschubführung 2, in der ein Schlitten 3 in einer Richtung senkrecht auf der Zeichnungsebene der Fig. 1 stehend geführt ist. Der Schlitten 3 hat eine oben offene, topfförmige Mulde 4, in die ein Tastschalter 5 eingebaut ist. Innerhalb seines Gehäuses befinden sich ein oder mehrere Kontakte, die durch eine Taste 6 des Schalters betätigt werden können. Die Taste 6 ist innerhalb des Gehäuses des Schalters 5 federnd in der in Fig. 2 dargestellten Position gehalten. Der Schlitten 3 ist gegen eine ortsfeste Stütze 7 durch eine Feder 8 abgestützt, die eine größere Kraft aufbringt als die nicht dargestellte Feder der Taste 6.

In derselben Führungsrichtung wie der Schlitten 3 ist im Schlitten ein Bügel 9 geführt und über eine Feder 10 am Schlitten 3 abgestützt. Frontseitig umfaßt der Bügel 9 den Kopf der Taste 6 durch eine Gabel 11. Quer zur Bewegungsrichtung des Bügels 9 ist hinter ihm eine Sperre 12 beweglich angeordnet, die ebenfalls durch eine Feder 13 in ihrer links gestrichelt gezeichneten Stellung gehalten wird. Die Sperre 12 ist mit einem Bowdenzug 14 gekoppelt, an dessen anderen Ende 15 eine Handhabe 16 als Drucktaste angeordnet ist.

Den vorderen rahmenartigen Teil 1 durchdringt der Schaltstift 17 einer nicht dargestellten Tür oder Klappe, die gemäß Fig. 2 in die Verschlußposition überführt werden soll. Dabei setzt der Schaltstift, der breiter ist als der Schlitz in der Gabel, auf die Gabel 11 des Bügels 9 auf, der bei in Sperrposition gehaltener Sperre 12 vom Schaltstift 17 nicht gegenüber dem Schlitten 3 bewegt werden kann.

Sofern die Sperre 12 sich frei von der Führung 2 mit dem Schlitten 3 bewegen läßt, wird die Kraft des Schaltstiftes 17 über die Gabel 11 und den Bügel 9 sowie die Sperre 12 auf den Schlitten 3 übertragen, so daß der gesamte Schlitten 3 vom Schaltstift 17 gegen die Kraft der Feder 8 in das Gehäuse des Wäschetrockners hineingeschoben wird, ohne die Taste 6 des Schalters 5 niederzudrücken. Sobald anschließend die Drucktaste 16 niedergedrückt wird, wird über den Bowdenzug 14 die Sperre 12 aus ihrer Sperrposition gezogen und gibt den Bügel 9 frei, der dann tiefer in den Schlitten 3 eintaucht, so daß der Schlitten 3 - angetrieben durch die Druckfeder 8 - gegen den Schaltstift 17 bewegt wird. Dabei werden die Taste 6 des Schalters 5 niedergedrückt und dessen Kontakte betätigt. Damit wird die Bewegung der Wäschetrommel initiiert.

Die Sperre 12 kann auch in Bewegungsrichtung des Bügels 9 unbeweglich eingebaut sein. Dann würde der Schaltfinger 17 bei gesperrtem Bügel hart auf die Gabel 11 auflaufen und die Taste 6 nicht erreichen. Dadurch ließe sich die Tür oder Klappe ohne Betätigung der Handhabe nicht schließen. Statt dessen kann auch der Schaltstift gegen eine eigene Feder zurückweichen, bis der Bügel entsperrt ist. Seine Federkraft muß dann die der Taste überwinden können. Erst bei gelöster Sperre 12 könnte der Bügel 9 vor dem Schaltfinger 17 zurückweichen und die Taste 6 des Schalters 5 zur Betätigung durch den Schaltfinger 17 freigeben.

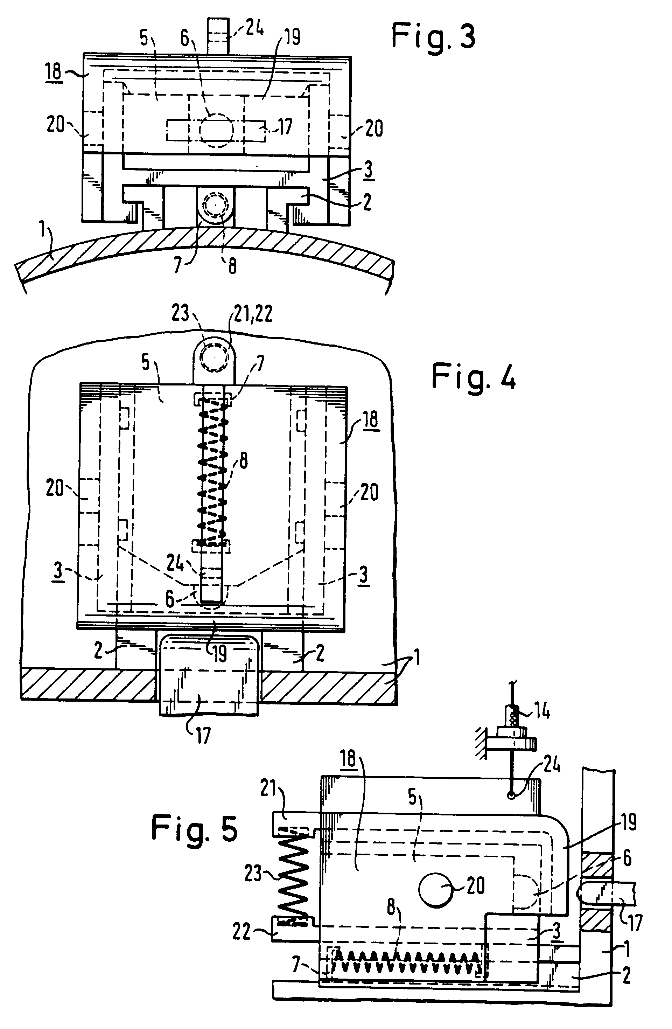

Bei dem in Fig. 3 bis 5 dargestellten Ausführungsbeispiel für die Verschlußvorrichtung ist die Gleitschubführung 2 im Gegensatz zu der in Fig. 1 und 2 dargestellten Ausführungsform so ausgebildet, daß sie die Führung des Schlittens 3 von innen ergreift. Der Schlitten wird ebenfalls unter der Wirkung einer Feder 8 und der ortsfesten Gegenlage 7 in der Ruheposition gehalten. Auch ist die Feder 8 stärker als die nicht gezeichnete Feder unter der Taste 6. Der Schalter 5 ist ebenso angeordnet wie in Fig. 1, seine Taste 6 wird jedoch von einer Schwenkkappe 18 mit Bügel 19 gegen Betätigung geschützt. Sie ist auf Zapfen 20 am Schlitten 3 schwenkbar gelagert. An der Rückseite trägt die Schwenkkappe 18 ein Federlager 21, dem ein Gegenlager 22 des Schlittens 3 gegenüberliegt. Zwischen dem Federlager 21 und dem Gegenlager 22 ist eine Druckfeder 23 gespannt. Durch diese Druckfeder wird die Schwenkkappe 18 in einer Position gehalten, in der ihr Bügel 19 die Schutzposition vor der Taste 6 einhält. An der Oberseite trägt die Kappe 18 eine Öse 24, in die die Seele eines Bowdenzugs 14 ähnlich dem Ausführungsbeispiel der Fig. 1 und 2 eingehängt ist. Dieser Bowdenzug kann auch ähnlich betätigt werden wie in Fig. 2 dargestellt ist.

Die Funktion des in Fig. 3 bis 5 dargestellten Ausführungsbeispiels ist ähnlich der des in Fig. 1 und 2 dargestellten Beispiels. Bei unbetätigter Handhabe 16 (Fig. 2) befindet sich die Schwenkkappe 18 in der in Fig. 3 und 5 dargestellten Schutzposition, in der ihr Bügel 19 vor der Taste 6 steht. Soll die nicht dargestellte Tür geschlossen werden, dann bewegt sich ihr Schaltfinger 17 auf den Bügel 19 zu und drückt ihn über die Lagerzapfen 20 zusammen mit dem Schlitten 3 gegen den Druck der Feder 8 in eine tiefer im Gehäuse liegende Position. Sobald danach die Handhabe 16 betätigt wird, zieht die Seele des Bowdenzugs 14 die Schwenkkappe 18 an der Öse 24 nach oben, bis der Bügel 19 aus dem Zwischenraum zwischen dem Schaltfinger 17 und der Taste 6 herausgezogen ist. Dann bewegt sich der Schlitten 3 auf den Schaltfinger 17 zu, der seinerseits die Taste 6 in das Gehäuse des heranrückenden Schalters 5 drückt und dessen Kontakte betätigt. Damit wird die den Gefahrenbereich kennzeichnende Funktion, nämlich die Drehung der Wäschetrommel, in Gang gesetzt.

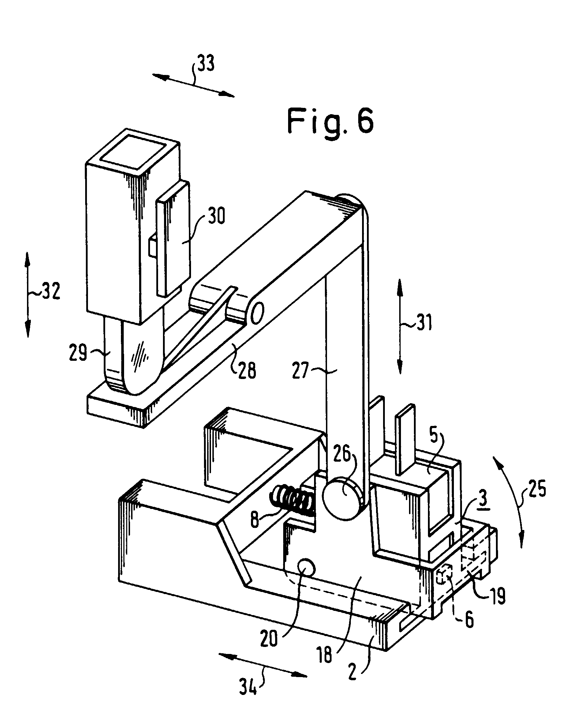

Ein weiteres Ausführungsbeispiel, das von der Funktion her dem der Figuren 3 bis 5 sehr ähnelt, ist in Fig. 6 dargestellt. In der folgenden Beschreibung nicht erwähnte Bauteile oder Funktionen ähneln daher denen des Ausführungsbeispiels der Fig. 3 bis 5.

Der in der Führung 2 geführte Schlitten 3 nimmt hier einen hochkant eingebauten Schalter 5 auf, dessen Taste 6 wie in den übrigen Beispielen in Richtung auf die Frontseite angeordnet ist und einem in Fig. 6 nicht dargestellten Schaltfinger gegenübersteht. Im Zwischenraum zwischen diesem Schaltfinger und der Taste 6 ist ebenfalls ein in Schutzposition befindlicher Bügel 19 angeordnet und mit einer Schwenkkappe 18 verbunden, die über Lagerzapfen 20 an dem Schlitten 3 schwenkbar gelagert ist. Auf der Rückseite (hier nicht sichtbar) hat die Schwenkkappe 18 eine querliegende Brücke, die eine Aufnahme für die Feder 8 trägt und sich gemeinsam mit dem Schlitten 3 gegen die Feder 8 abstützt. Um die Schwenkkappe 18 in Richtung des Pfeiles 25 hinauf- und herunter bewegen zu können, ist am Drehpunkt 26 eine Zugstange 27 angelenkt, die sich über eine Waage 28 von einem Stößel 29 einer Handhabe 30 hinauf- und herunterbewegen läßt. Dabei wird die Abwärtsbewegung der Zugstange und der Schwenkkappe 18 durch die Feder 8 unterstützt. Die Pfeile 31 geben die Bewegungsrichtung der Zugstange 27, die Pfeile 32 die Bewegung des Stößels 29 und die Pfeile 33 die Bewegungsrichtung der Handhabe 30 an. Die Pfeile 34 deuten hier die Bewegungsrichtung des Schlittens 3 an.

In Abwandlung vom Ausfürungsbeispiel der Fig. 6 kann eine solche Zugstange 27 auch als fester Hebel in eine seitlich in Richtung der Bewegung des Schlittens 3 orientierte Führungsbahn an der Schwenkkappe 18 eingreifen. Hierfür sind auch weitere, hier nicht dargestellte Ausführungsformen für die Winkelübertragung der Bewegung einer Handhabe denkbar.

## Patentansprüche

1. Verschlußvorrichtung für einen durch eine von innen aufstoßbare Tür oder Klappe abschließbaren und durch eine Funktion gekennzeichneten Gefahrenbereich, dessen Funktion ausschließlich von außen einschaltbar ist, wenn die Tür oder Klappe die Schließposition inne hat, insbesondere für einen Haushalt-Wäschetrockner mit einer Tür oder Klappe zur von vorn beschickbaren Wäschetrommel als Gefahrenbereich und mit einer Handhabe (16, 30), die bei geschlossener Tür oder Klappe die Einschaltung der Funktion, insbesondere der Trommeldrehung, ermöglicht,
**dadurch gekennzeichnet**, daß die Handhabe (16, 30) nichtrastend ist, daß an einem für die Bedienungsperson unerreichbaren Ort auf einem Schlitten (3) ein die Funktion steuernder Tastenschalter (5) angeordnet ist, dessen Taste (6) in Bewegungsrichtung (Pfeil 34) des Schlittens (3) betätigbar und von einem sie gegen Betätigung schützenden Bügel (9, 11, 19) abgedeckt ist, der am Schlitten (3) gelagert und durch die Handhabe (16, 30) aus seiner Schutzposition bringbar oder zur Bewegung aus dieser Schutzposition vorbereitbar ist, daß an der Tür oder Klappe ein in Schließposition auf der Taste (6) bzw. dem Bügel (11, 19) lastender Schaltfinger (17) angebracht ist und daß der Schlitten (3) in Richtung auf den Schaltfinger (17) zu federvorbelastet ist.

2. Vorrichtung nach Anspruch 1, dadurch gekennzeichnet, daß der Bügel (11) Bestandteil eines Stößels (9) ist, der in Bewegungsrichtung des Schlittens (3) beweglich auf diesem gelagert ist, durch eine von der Handhabe (16) entriegelbare Sperre (12) in der Schutzposition gehalten ist und nach der Entriegelung in eine Position überführbar ist, in der die Taste (6) vom Schaltfinger (17) der Tür oder Klappe erreichbar ist.

3. Vorrichtung nach Anspruch 1, dadurch gekennzeichnet, daß der Bügel (18, 19) am Schlitten (3) schwenkbar gelagert ist.

4. Vorrichtung nach einem der Ansprüche 1 bis 3, dadurch gekennzeichnet, daß der Bügel (19) über einen Bowdenzug (14) mittels der Handhabe (16) in die Entriegelungsposition überführbar ist.

5. Vorrichtung nach einem der Ansprüche 1 bis 3, dadurch gekennzeichnet, daß der Bügel (19) über einen Winkelhebel (27, 28) mittels der Handhabe (30) in die Entriegelungsposition überführbar ist.

6. Vorrichtung nach Anspruch 5, dadurch gekennzeichnet, daß der Winkelhebel an seinem der Handhabe (30) abgewandten freien Ende einen Kulissenzapfen trägt und mit diesem in eine Kulissenführung des Bügels (18, 19) seitlich eingreift.

## Claims

1. Closure device for a danger region, which is closable by a door or flap pushable open from inside and is characterised by a function which is switchable on exclusively from outside when the door or flap is in the closed position, in particular for a domestic laundry drier with a door or flap to the front-loading laundry drum as danger region, and with a handle (16, 30) which enables the switching-on of the function, in particular the rotation of the drum, when the door or flap is closed, characterised thereby, that the handle (16, 30) is non-detenting, that a key switch (5), which controls the function, is arranged on a sliding carriage (3) at a place inaccessible to the operating person, the key (6) of which switch is actuable in the direction of movement (arrow 34) of the sliding carriage (3) and covered by a bracket (9, 11, 19), which protects it against actuation, is borne at the sliding carriage (3) and is capable of being brought out of its protective position or of being prepared for movement out of this protective position by the handle (16, 30), that a switching finger (17), which in the closed position weighs on the key (6) or the bracket (11, 19), is mounted at the door or flap and that the sliding carriage (3) is spring-biassed in direction towards the switching finger (17).

2. Device according to claim 1, characterised thereby, that the bracket (11) is component of a plunger (9), which is borne on the sliding carriage (3) to be movable in the direction of movement thereof, is retained in the protective position by a gate (12), which is unlatchable by the handle (16), and is transferable after the unlatching into a position, in which the key (6) is reachable by the switching finger (17) of the door or flap.

3. Device according to claim 1, characterised thereby, that the bracket (18, 19) is borne to be pivotable at the sliding carriage (3).

4. Device according to one of the claims 1 to 3, characterised thereby, that the bracket (19) is transferable into the unlatching position by means of the handle (16) by way of a Bowden pull (14).

5. Device according to one of the claims 1 to 3, characterised thereby, that the bracket (19) is transferable into the unlatching position by means of the handle (30) by way of an angle lever (27, 28).

6. Device according to claim 5, characterised thereby, that the angle lever at its free end remote from the handle (30) carries a slide gate spigot and engages by this laterally into a slide gate guide of the bracket (18, 19).

## Revendications

1. Dispositif de fermeture pour un espace dangereux fermé par une porte ou une trappe pouvant être ouverte de l'intérieur et caractérisé par une fonction déclenchée exclusivement depuis l'extérieur, lorsque la porte ou la trappe est dans sa position de fermeture, notamment pour un séche-linge ménager comportant une porte ou une trappe donnant accès au tambour à linge à chargement frontal, en tant qu'espace dangereux, et une manette (16, 30) qui permet de délencher la fonction, notamment la rotation du tambour, lorsque la porte ou la trappe est fermée, caractérisé par le fait que la manette (16, 30) est du type sans enclenchement, par le fait qu'un interrupteur à bouton poussoir (5) commandant la fonction est disposé sur un chariot (3) en un endroit non accessible pour l'utilisateur, interrupteur dont le bouton poussoir (6) peut être ectionné dans la direction de déplacement (flèche 34) du chariot (3), est protégé contre tout actionnement par un arceau (9, 11, 19) monté sur le chariot (3) et peut être dégagé par la manette (16, 30) de sa position protégée ou peut être activé à des fins de dégagement de cette position protégée, par le fait qu'un doigt de déclenchement (17) qui, en position fermée, sollicite le bouton poussoir (6) ou l'arceau (11, 19) est fixé à la porte ou à la trappe et par le fait que le chariot (3) est précontraint par ressort en directrion du doigt de déclenchement (17).

2. Dispositif selon la revendication 1, caractérisé par le fait que l'arceau (11) fait partie d'un poussoir (9) qui est monté mobile dans la direction de déplacement du chariot (3), sur celui-ci, est maintenu dans la position protégée par un verrou (12) déverrouillable par le doigt de déclenchement (17) et après déverrouillagepeut être amené dans une position dans laquelle le bouton poussoir (6) peut être atteint par le doigt de déclenchement (17) de la porte ou de la trappe.

3. Dispositif selon la revendication 1, caractérisé par le fait que l'arceau (18, 19) est monté pivotant sur le chariot (3).

4. Dispositif selon l'une des revendications 1 à 3, caractérisé par le fait que l'arceau (19) peut être amené dans la position déverrouillée au moyen de la manette (16) par l'intermédiaire d'un câble de Bowden (14).

5. Dispositif selon l'une des revendications 1 à 3, caractérisé par le fait que l'arceau (19) peut être amené dans la position déverrouillée au moyen de la manette (30) par l'intermédiaire d'un levier coudé (27, 28).

6. Dispositif selon la revendication 5, caractérisé par le fait que le levier coudé, à son extrémité éloignée de la manette (30), porte un axe de coulisse et s'engage avec celui-ci latéralement dans une glissière de coulisse de l'arceau (18, 19).
